(19) Europäisches Patentamt

European Patent Office

Office européen des brevets

(11) **EP 0 648 052 B1**

## (12) EUROPEAN PATENT SPECIFICATION

(45) Date of publication and mention
of the grant of the patent:
**01.03.2000 Bulletin 2000/09**

(51) Int. Cl.⁷: **H04N 7/01**

(21) Application number: **94113494.2**

(22) Date of filing: **30.08.1994**

(54) **Method and apparatus for motion estimation using block matching**

Verfahren und Vorrichtung zur Bewegungsauswertung mit Blockübereinstimmung

Procédé et appareil pour l'estimation de mouvement avec correspondance de bloc

(84) Designated Contracting States:
**DE FR GB IT**

(30) Priority: **08.09.1993 EP 93402188**
**02.11.1993 EP 93117661**

(43) Date of publication of application:
**12.04.1995 Bulletin 1995/15**

(73) Proprietor: **THOMSON multimedia**
**92648 Boulogne Cédex (FR)**

(72) Inventors:
• **Knee, Michael**
**F-67000 Strasbourg (FR)**

• **Kerdranvat, Michel**
**F-67870 Bischoffsheim (FR)**
• **Hackett, Andrew**
**F-67530 Klingenthal (FR)**
• **Bolender, Nadine**
**F-67000 Strasbourg (FR)**

(74) Representative:
**Hartnack, Wolfgang, Dipl.-Ing. et al**
**Deutsche Thomson-Brandt GmbH**
**European Patent Operations**
**Karl-Wiechert-Allee 74**
**30625 Hannover (DE)**

(56) References cited:
**US-A- 5 162 907**

**Description**

The present invention relates to a method and to an apparatus for motion estimation using block matching.

Background

Block matching is well known as a robust and intuitively simple method of motion estimation for television pictures. One important parameter in block matching is the block size. Large blocks give more reliable motion estimation than small blocks, particularly in the presence of noise on the input picture, but they produce a coarser motion vector field. If the goal of the motion estimation is to provide a motion compensated prediction, for example in bit rate reduction applications, a suitable compromise can usually be found, bearing in mind the fact that neither reliability nor a fine motion vector field are necessary conditions for good performance since occasional errors can be tolerated. If, however, the motion estimation is being used for motion compensated interpolation, for example for upconversion between 50 and 100Hz display rates, the effects on picture quality of wrong vectors for whole blocks, and also of vectors that do not correctly follow the boundaries of moving objects, can be severe.

US-A-5 162 907 discloses a motion estimation using block matching, wherein motion vectors related to pixel blocks are calculated and from the block motion vectors pixel motion vectors are derived. The block matching starts with a predetermined block size. If no 'good' vector is found the block matching is carried out using extended blocks. From the collection of 'good' vectors for a picture the three most frequent are regarded as representing global motion vectors. The zero vector is also regarded as representing a 'good' vector. For each pixel in a block a specific motion vector is assigned using either one of at maximum four 'good' vectors (including the zero vector) from the current block and blocks adjacent to the current block or one of the global motion vectors.

Invention

It is one object of the invention to disclose a method by which the reliability advantages of a large block size are combined with the performance of more localized motion vectors. This object is achieved by the method disclosed in claim 1.

It is a further object of the invention to disclose an apparatus which utilises the inventive method. This object is achieved by the apparatus disclosed in claim 9.

The inventive solutions are slightly different, but are all based on block matching using large blocks, followed by post-processing in which the boundaries between motion vectors are fixed more precisely or 'localized'.

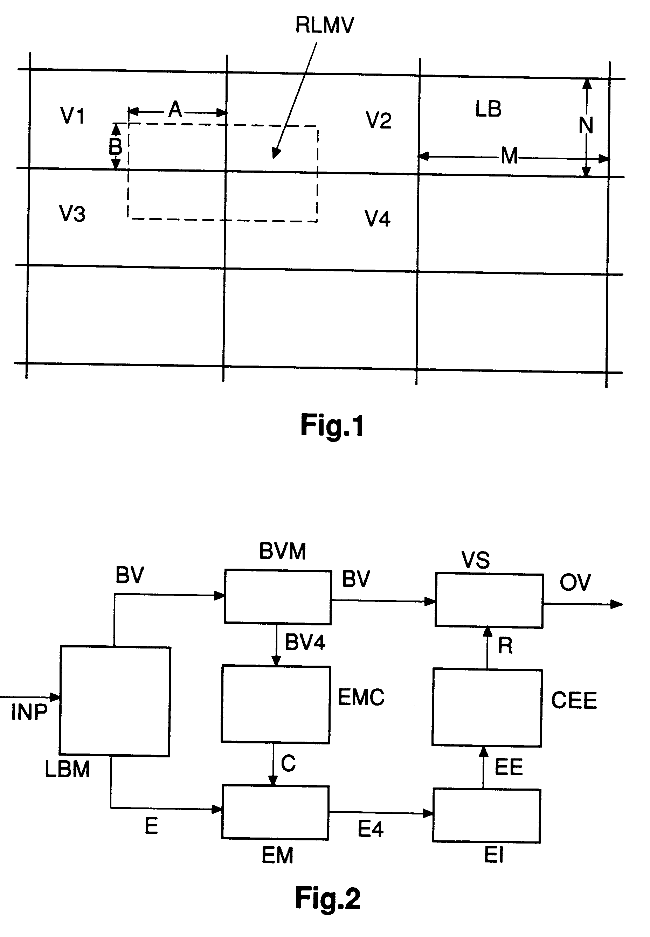

As depicted in Fig. 1, the picture is divided into large rectangular blocks LB $(x_b , y_b)$, where $x_b$ is a horizontal coordinate increasing from left to right and $y_b$ a vertical coordinate increasing from top to bottom of the picture. In the descriptions below, the block size is supposed to be M pixels by N lines. Typical block sizes are 8x8, 16x8 or 16x16. The block matching may be carried out either on a subsampled image as described in EP93 402059 of the applicant or on the original, and may be either conventional or 'two-sided', wherein the block to be interpolated is matched with a previous and a subsequent picture, as described in EP93 402187 of the applicant. The block matching process yields an error value $E(v_x ,v_y)$ for each candidate motion vector $(v_x ,v_y)$. The motion vector chosen for the block is the one for which the error is a minimum.

The aim of the localization process is to produce a separate motion vector for each pixel. One feature that is common to all the localization methods is that, for any pixel, the motion vector will be one of four possibilities: the vector calculated for the block containing the pixel and the vectors of the nearest blocks horizontally, vertically and diagonally, as illustrated in figure 1. The pixels for which the choice will be made from a given set of vectors form an offset block, shown in the figure by a broken line. In this region, localized motion vectors are chosen from the vectors V1, V2, V3 and V4 of the corresponding adjacent large blocks.

In principle, the inventive method is suited for motion estimation using block matching, wherein a motion vector related to each block is calculated and wherein for any pixel of the current block, a pixel motion vector is calculated using four motion vectors, that is the motion vector of the current block and the motion vectors of the three adjacent blocks, whereby

- for any pixel, from error values related to said four block motion vectors several estimated errors are calculated, taking into account the position of the pixel relative to the centre of each of the corresponding block, whereby the minimum of said estimated errors is taken to select the related of said four block motion vectors as the final motion vector for said pixel, or whereby

- in addition, for each pixel a pixel matching is performed by comparing said four motion vectors, followed by counting in rows the number of choices from the left, respectively right, pair of blocks and by counting in columns the number of choices from the upper, respectively lower, pair of blocks and re-ordering the vectors to form groups of identical vector types in such a way, that every pixel has two decisions which together define a unique motion vector for the pixel, or whereby

- in addition, for each subblock smaller than said block a subblock matching is performed by comparing said four motion vectors relevant to the subblock and selecting one with respect to a minimum subblock error, whereafter a dominant subblock vector is generated from the selected vectors by combining them.

Advantageous additional embodiments of the inventive method are resulting from the respective dependent claims.

In principle, a first embodiment of the inventive apparatus for motion estimation using block matching, wherein a motion vector related to each block of a picture signal is calculated, includes:

- large-block matching means receiving said picture signal and producing block motion vectors and related block errors;
- memory means which store said block motion vectors and said errors;
- error estimation means, in particular linear error interpolation means, which operate on stored error values corresponding to each four related block motion vectors, that is the motion vector of the current block and the motion vectors of the three adjacent blocks, and which calculate for each pixel estimated errors, taking into account the position of the pixel relative to the centre of each of the corresponding block;
- comparing means which take the minimum of said estimated errors;
- selecting means for selecting in relation to said minimum the respective of said four block motion vectors as a final motion vector for the current pixel.

In principle, a second embodiment of the inventive apparatus for motion estimation using block matching, wherein a motion vector related to each block of a picture signal is calculated, includes:

- large-block matching means receiving said picture signal and producing block motion vectors;
- memory means which store said block motion vectors;
- pixel matching means which compare each four of said stored block motion vectors, that is the motion vector of the current block and the motion vectors of the three adjacent blocks;
- count means for counting in rows the number of vector choices from the left, respectively right, pair of blocks and by counting in columns the number of vector choices from the upper, respectively lower, pair of blocks and for re-ordering the vectors to form groups of identical vector types in such a way, that every pixel has two decisions;
- assigning means which combine said two decisions for defining a unique motion vector for each pixel, selected from the corresponding block motion vectors.

In principle, a third embodiment of the inventive apparatus for motion estimation using block matching, wherein a motion vector related to each block of a picture signal is calculated, includes:

- large-block matching means receiving said picture signal and producing block motion vectors;
- memory means which store said block motion vectors;
- subblock matching means which compare each four of said stored block motion vectors, that is the motion vector of the current block and the motion vectors of the three adjacent blocks to select a vector which has a minimum subblock error;
- combining means, in particular median filter means, which generate a dominant subblock vector from said selected vectors.

Advantageous additional embodiments of the inventive apparatus are resulting from the respective dependent claims.

Drawings

Preferred embodiments of the invention are described with reference to the accompanying drawings, which show in:

Fig. 1    possible motion vectors for localization;
Fig. 2    block diagram of localization by error interpolation;
Fig. 3    localization by vote counting;
Fig. 4    block diagram of localization by vote counting;

Fig. 5    block diagram of localization by subblock matching.

<u>Preferred embodiments</u>

*Localisation by error interpolation*

This embodiment works by calculating an estimated error for each pixel, for each of the four motion vectors from which the choice will be made, and then choosing the vector for which the estimated error is a minimum. For each of the four vectors, the estimated error is calculated by linear interpolation between the block matching errors produced for each of the four blocks concerned, taking into account the position of the pixel in question relative to the centre of each block. For example, if the horizontal distance of the pixel from the centre of the upper left block is A and its vertical distance B, the motion vector is V and the errors from each of the four blocks are $E_1(V)$, $E_2(V)$, $E_3(V)$ and $E_4(V)$, the estimated error for the pixel is:

$$EE = (1-A/M)*(1-B/N)*E_1 + (A/M)*(1-B/N)*E_2 + (1-A/M)*(B/N)*E_3 + (A/M)*(B/N)*E_4$$

This method extends the areas for which block matching errors are likely to be small, thereby achieving a better match between the motion vectors and objects moving with different velocities, while preserving the continuity of the boundaries between motion vectors.

Figure 2 is a block diagram of a possible hardware implementation. Large-block matching means LBM receiving the input signal INP produce for each candidate motion vector and for each block errors E, which are stored in an error memory EM, together with block motion vectors BV, which are stored in a block vector memory BVM and for which the error is a minimum in each block. Motion vectors BV4 from the memory BVM are used in sets of four to control (C) via error memory control means EMC access to the corresponding error values over four blocks which are stored in error memory EM. These errors E4 form the input to an error interpolator EI which calculates estimated errors EE, pixel by pixel. Finally, the four estimated errors for each pixel are compared in comparing means CEE and the minimum R is used to select in vector selecting means VS from the motion vectors BV the output motion vector OV for that pixel.
An advantage of this embodiment is that it retains good noise performance.

*Localization by vote-counting*

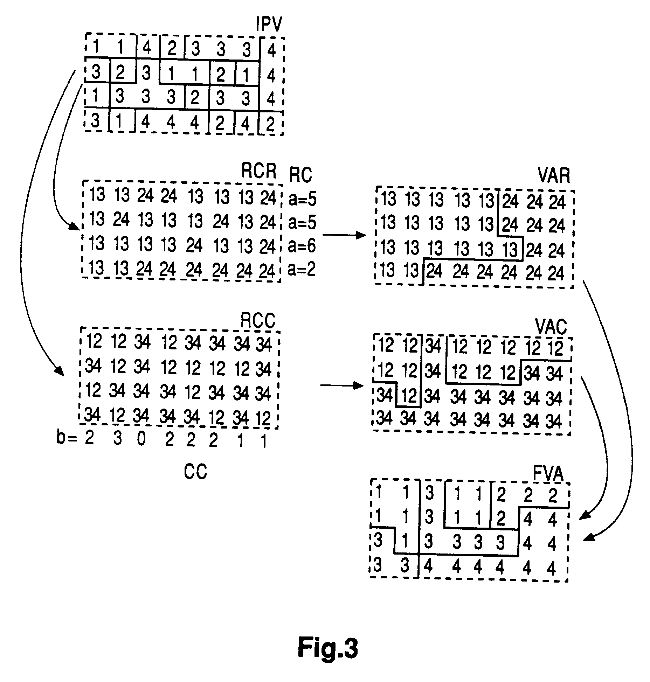

This embodiment works by first performing the 'block matching' operation on each pixel using a block size of one pixel only and comparing only the four vectors allowed for the pixel. This can be thought of as giving each pixel a 'vote' for one of the four vectors. On its own, this operation introduces an unacceptable number of spurious vectors, so it is followed by an adjustment of the boundaries between motion vectors. An example of the operation of this embodiment is given in figure 3.
Within each row of the block-sized area marked by the dotted line in Figure 1 (input pixel vectors IPV), the number of choices for vectors from the two blocks on the left ($V_1$ and $V_3$, result of counting rows RCR) is counted. If the result (row count RC) is 'a', say, the decision is made that the 'a' leftmost pixels in the row will be given motion vectors $V_1$ or $V_3$ and the (M-a) rightmost pixels $V_2$ or $V_4$ (vector assignment in rows VAR). Similarly, within each column, the number of choices for the upper pair of vectors ($V_1$ and $V_2$, result of counting columns RCC) is counted (column count CC). If the result is 'b', it is decided that the 'b' uppermost pixels in the column will be given motion vectors $V_1$ or $V_2$ and the (N-b) lowest pixels $V_3$ or $V_4$ (vector assignment in columns VAC). After both the rows and columns have been looked at in this way, every pixel has two decisions which together define a unique motion vector for the pixel (final vector assignment FVA) by forming areas in which both decisions (VAR and VAC) contain the same kind of vector.
Note: in Fig. 3, '13' means '1 or 3', '24' means '2 or 4', etc.

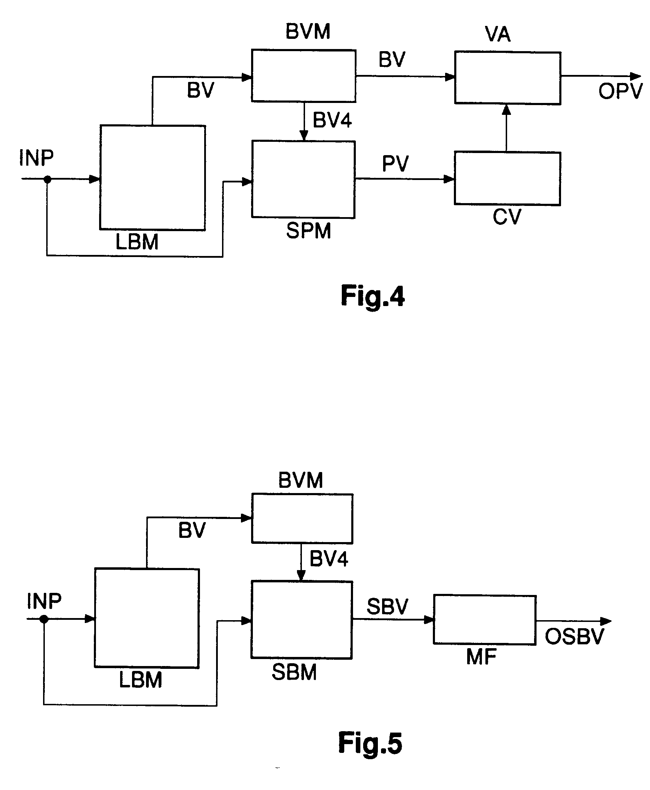

Figure 4 is a block diagram of a possible hardware implementa tion of this embodiment. Large-block matching means LBM receiving the input signal INP produce for each block block vectors BV, which are stored in a block vector memory BVM. Single-pixel matching means SPM receive the input signal INP and evaluate sets of four block vectors BV4 received from block vector memory BVM. The resulting single-pixel vectors PV (the 'votes') are stored in vote count means CV and are reassigned in a vector assigner VA using the block vectors BV from memory BVM, according to the counting algorithm described above, to provide the final output pixel vectors OPV.

This method also retains good noise performance and is quite simple in hardware because the secondary, single-pixel search requires only four comparisons per pixel. The process of counting votes across rows and columns can be generalized to take into account the magnitudes of the errors resulting from the single-pixel 'block matching' process.

*Localization by subblock matching*

This method also uses matching of smaller blocks, but here a compromise is made between the reliability of larger blocks and the need for a pixel-based motion vector field. Block matching is performed using small blocks, typically 2x2, again comparing only the four vectors relevant to the small block (or 'subblock'). The resulting motion vector field is much more reliable than that resulting from a search using single pixels, but there is a slight penalty in that the localization is coarser.

With a subblock size of 2x2, there is some benefit in following the subblock search with post-processing to remove the occasional spurious result, especially if the input picture is noisy. One possibility is a median filter, using a window of 3 subblocks by 3 subblocks, on each component of the motion vector separately. This is a fairly simple process but has the slight disadvantage that the output motion vectors might not be one of the nine vectors on the window from which the median is taken. This disadvantage is not severe, especially if the vertical motion vector range is small, but it can be overcome by using a 3x3 'vector median' filter on the motion vectors, as described in "An overview of median and stack filtering", GABBOUJ, M. et al, 1991, Circuits Systems Signal Processing, Vol 11, No 1, 1992.

Simulations have shown that localization by subblock searching, followed by a 3x3 median filter on each component, gives a closer approximation to the true motion field than either of the other two embodiments. In most architectures it is also likely to be the simplest to implement in hardware, but the other embodiments may prove simpler to implement or to have better performance in certain applications.

Figure 5 is a block diagram of a possible implementation. Largeblock matching means LBM receiving the input signal INP produce for each block block vectors BV, which are stored in a block vector memory BVM. Subblock matching means SBM receive the input signal INP and evaluate sets of four vectors BV4 received from block vector memory BVM. The resulting subblock vectors SBV which have been selected in SBM with respect to the minimum subblock error are median filtered in filter means MF to produce the final output subblock vectors OSBV.

**Claims**

1. Method for motion estimation using block matching, wherein block motion vectors (BV) related to pixel blocks (LB) are calculated and from the block motion vectors (BV) pixel motion vectors (OV, OPV) are calculated, **characterised** in that said pixel blocks have a predetermined size which remains fixed in the motion vector calculation processing and that for each pixel of a current pixel block a pixel motion vector (OV, OPV, OSBV) is calculated using in each case the block motion vector (V1) for the current pixel block and only the three other block motion vectors (V2, V3, V4) for the three adjacent pixel blocks which are nearest to that quarter of pixels of the current pixel block to which a current pixel belongs.

2. Method according to claim 1, comprising the following steps:

   - from error values (E4) in said block matching which relate to the block motion vector (V1) for the current pixel block and said three other block motion vectors (V2, V3, V4), in each case each of the four vectors (BV4) being applied to all four blocks, for any pixel four estimated errors (EE) are calculated (EM, EI) thereby taking into account the spatial position of the current pixel with respect to the centres of the current pixel block and said three adjacent pixel blocks;
   - taking (VS) the minimum (R) of said four estimated errors in order to select the related of said four block motion vectors as the final motion vector (OV) for the current pixel.

3. Method according to claim 2, wherein said estimated errors (EE) are calculated (EI) using linear interpolation.

4. Method according to claim 1, comprising the following steps:

   - performing for the current pixel in addition a pixel matching (SPM) using the block motion vectors (V1, V2, V3, V4, BV4) for the current pixel block and for said three adjacent pixel blocks;
   - counting (CV) in rows the number of choices (1/3, 2/4) from the left, respectively right, pair of blocks and counting (CV) in columns the number of choices (1/2, 3/4) from the upper, respectively lower, pair of blocks;
   - re-ordering the preliminary vector choice pairs according to the vector choice component majorities in order to form groups of identical vector choice pairs in such a way, that for every pixel two vector choice pairs which contain one same vector choice component define (VA) the final motion vector (OPV) for the current pixel by that same vector choice component.

5. Method according to claim 1, comprising the following steps:

- performing additionally a matching (SBM) of pixel subblocks smaller than said pixel blocks (LB), thereby using for a current subblock the block motion vector (V1) for the current pixel block and said three other block motion vectors (V2, V3, V4);
- selecting in each case the subblock vector (SBV) relating to the minimum subblock matching error and combining (MF) the selected subblock vectors, thereby determining the motion vector for said current pixel.

6. Method according to claim 5, wherein said combining is a median filtering (MF) of said subblock vectors (SBV), in particular median filtering each component of subblock vectors separately.

7. Method according to any of claims 1 to 6, wherein said block matching (LBM) is carried out on subsampled pictures.

8. Method according to any of claims 1 to 7, wherein said block matching (LBM) is a two-sided block matching.

9. Apparatus for motion estimation using block matching, wherein block motion vectors (BV) related to pixel blocks (LB) are calculated and from the block motion vectors (BV) pixel motion vectors (OV, OPV) are calculated, **characterised** by:

- means (LBM, BVM) for calculating and storing motion vectors (BV) for said pixel blocks (LB), said pixel blocks having a predetermined size which remains fixed in the motion vector calculation processing;
- pixel motion vector means (EMC, EM, EI, CEE, VS; SPM, CV, VA; SBM, MF) for calculating for each pixel of a current pixel block a pixel motion vector (OV, OPV, OSBV) using in each case the block motion vector (V1) for the current pixel block and only the three other block motion vectors (V2, V3, V4) for the three adjacent pixel blocks which are nearest to that quarter of pixels of the current pixel block to which a current pixel belongs.

10. Apparatus according to claim 9, wherein said pixel motion vector means comprises:

- error estimation means (EI), in particular linear error interpolation means, which calculate for any pixel four estimated errors (EE) from stored (EM) error values (E4) in said block matching corresponding to the block motion vector (V1) for the current pixel block and said three other block motion vectors (V2, V3, V4), wherein in the error estimation means in each case each of the four vectors (BV4) is applied to all four blocks, thereby taking into account the spatial position of the current pixel with respect to the centres of the current pixel block and said three adjacent pixel blocks;
- comparing means (CEE) which determine in each case the minimum (R) of said four estimated errors (EE);
- selecting means (VS) for taking in relation to said minimum the respective one of said four block motion vectors as a final motion vector (OV) for the current pixel.

11. Apparatus according to claim 9, wherein said pixel motion vector means comprises:

- pixel matching means (SPM) which perform for the current pixel in addition a pixel matching (SPM) using the block motion vectors (V1, V2, V3, V4, BV4) for the current pixel block and for said three adjacent pixel blocks;
- count means (CV) for counting in rows the number of choices (1/3, 2/4) from the left, respectively right, pair of blocks
  and for counting (CV) in columns the number of choices (1/2, 3/4) from the upper, respectively lower, pair of blocks
  and for re-ordering the preliminary vector choice pairs according to the vector choice component majorities in order to form groups of identical vector choice pairs in such a way, that for every pixel two vector choice pairs which contain one same vector choice component are determined;
- assigning means (VA) which define the final motion vector (OPV) for the current pixel by that same vector choice component.

12. Apparatus according to claim 9, wherein said pixel motion vector means comprises:

- subblock matching means (SBM) which perform additionally a matching of pixel subblocks smaller than said pixel blocks (LB), thereby using for a current subblock the block motion vector (V1) for the current pixel block and said three other block motion vectors (V2, V3, V4), and which select in each case the subblock vector (SBV) relating to the minimum subblock matching error;
- combining means (MF), in particular median filter means, which combine the selected subblock vectors, in particular the components of said selected subblock vectors, thereby determining the motion vector for said current pixel.

**Patentansprüche**

1. Verfahren zur Bewegungsschätzung unter Verwendung von Blockanpassung, bei dem auf Pixel-Blöcke (LB) bezogene Block-Bewegungs-Vektoren (BV) berechnet werden und aus den Block-Bewegungs-Vektoren (BV) Pixel-Bewegungs-Vektoren (OV, OPV) berechnet werden, **dadurch gekennzeichnet**, daß die Pixel-Blöcke eine vorgegebene Größe haben die in der Bewegungs-Vektor-Berechnungsverarbeitung fest bleibt, und daß für jedes Pixel eines gegenwärtigen Pixel-Blocks ein Pixel-Bewegungs-Vektor (OV, OPV, OSBV) berechnet wird, wobei jeweils der Block-Bewegungs-Vektor (V1) für den gegenwärtigen Pixel-Block und nur die drei anderen Block-Bewegungs-Vektoren (V2, V3, V4) der drei benachbarten Pixel-Blöcke verwendet werden, die dem Viertel von Pixeln des gegenwärtigen Pixel-Blocks am nächsten liegen, zu dem ein gegenwärtiges Pixel gehört.

2. Verfahren nach Anspruch 1, umfassend die folgenden Schritte:

   - aus Fehlerwerten E4) in der Block-Anpassung, die sich auf den Block-Bewegungs-Vektor (V1) für den gegenwärtigen Pixel-Block und die drei anderen Block-Bewegungs-Vektoren (V2, v3, V4) beziehen, wobei in jedem Fall jeder der vier Vektoren (BV4) allen vier Blöcken zugeführt wird, werden für jedes Pixel vier abgeschätzte Fehler (EE) berechnet (EM, EI), wobei die räumliche Position des gegenwärtigen Pixels in Bezug auf die Mitten des gegenwärtigen Pixel-Blocks der drei benachbarten Pixel-Blöcke berücksichtigt wird;
   - Nehmen (VS) des Minimums (R) der vier abgeschätzten Fehler, um den bezogenen der vier Block-Bewegungs-Vektoren als endgültigen Bewegungs-Vektor (OV) für das gegenwärtige Pixel auszuwählen.

3. Verfahren nach Anspruch 2, bei dem die abgeschätzten Fehler (EE) unter Verwendung von linearer Interpolation berechnet werden (EI).

4. Verfahren nach Anspruch 1, umfassend die folgenden Schritte;

   - Ausführen einer zusätzlichen Pixel-Anpassung (SPM) für das gegenwärtige Pixel unter Verwendung der Block-Bewegungs-Vektoren (V1, V2, V3, V4, BV4) für den gegenwärtigen Pixel-Block und für die drei benachbarten Pixel-Blöcke;
   - Zählen (CV) der Anzahl von Auswahlen (1/3, 2/4) in Reihen aus dem linken bzw. rechten Block-Paar und Zählen (CV) von Auswahlen (1/2, ¾) in Spalten aus dem oberen bzw. unteren Block-Paar;
   - Neuordnung der vorbereitenden Vektor-Auswahl-Paare gemäß den Vektor-Auswahl-Komponenten-Majoritäten, um Gruppen von identischen Vektor-Auswahl-Paaren derart zu bilden, daß für jedes Pixel zwei Vektor-Auswahl-Paare, die eine selbe Vektor-Auswahlkomponente enthalten, den endgültigen Bewegungs-Vektor (OPV) für das gegenwärtige Pixel durch jene selbe Vektor-Auswahlkomponente definieren (VA).

5. Verfahren nach Anspruch 1, umfassend die folgenden Schritte:

   - zusätzliches Ausführen einer Anpassung (SBM) von Pixel-Unterblöcken, die kleiner als die Pixel-Blöcke (LB) sind, wobei für einen gegenwärtigen Unterblock der Block-Bewegungs-Vektor (V1) für den gegenwärtigen Pixel-Block und die drei anderen Block-Bewegungs-Vektoren (V2, V3, V4) verwendet werden;
   - Auswahl in jedem Fall des Unterblock-Vektors (SBV), der sich auf den minimalen Unterblock-Anpassungsfehler bezieht, und Kombinieren (MF) der ausgewählten Unterblock-Vektoren, um dadurch den Bewegungs-Vektor für das gegenwärtige Pixel zu bestimmen.

6. Verfahren nach Anspruch 5, bei dem das Kombinieren eine Median-Filterung (MF) der Unterblock-Vektoren (SBV) ist, insbesondere eine getrennte Median-Filterung jeder Komponente von Unterblock-Vektoren.

7. Verfahren nach einem der Ansprüche 1 bis 6, bei dem die Blockanpassung (LBM) bei unterabgetasteten Bildern ausgeführt wird.

8. Verfahren nach einem der Ansprüche 1 bis 7, bei dem die Blockanpassung (LBM) eine zweiseitige Blockanpassung ist.

9. Vorrichtung zur Bewegungsabschätzung unter Verwendung von Blockanpassung, wobei auf Pixel-Blöcke (LB) bezogene Block-Bewegungs-Vektoren (BV) berechnet werden und aus den Block-Bewegungs-Vektoren (BV) Pixel-Bewegungs-Vektoren (OV, OPV) berechnet werden, gekennzeichnet durch:

- Mittel (LBM, BVM) zur Berechnung und Speicherung von Bewegungs-Vektoren (BV) für die Pixel-Blöcke (LB), wobei die Pixel-Blöcke eine vorgegebene Größe haben, die in der Bewegungs-Vektor-Berechnungsverarbeitung fest bleibt;
- Pixel-Bewegungs-Vektormittel (EMC, EM, EI, CEE, VS; SPM, CV, VA; SBM, MF) zur Berechnung eines Pixel-Bewegungs-Vektors (OV, OPV, OSPV) für jedes Pixel eines gegenwärtigen Pixel-Blocks, wobei jeweils der Block-Bewegungs-Vektor (V1) für den gegenwärtigen Pixel-Block und nur die drei anderen Block-Bewegungs-Vektoren (V2, V3, V4) der drei benachbarten Pixel-Blöcke verwendet werden, die *dem* Viertel von Pixeln des gegenwärtigen Pixel-Blocks am nächsten liegen, zu dem ein gegenwärtiges Pixel gehört.

10. Vorrichtung nach Anspruch 9, bei dem die Pixel-Bewegungs-Vektormittel umfassen:

- Fehler-Abschätzungsmittel (EI), insbesondere lineare Fehler-Interpolationsmittel, die für jedes Pixel vier abgeschätzte Fehler (EE) aus gespeicherten (EM) Fehler-Werten (E4) in der Blockanpassung entsprechend dem Block-Bewegungs-Vektor (V1) für den gegenwärtigen Pixel-Block und die drei anderen Block-Bewegungs-Vektoren (V2, V3, V4) berechnen, wobei in den Fehler-Abschätzungsmitteln in jedem Fall jeder der vier Vektoren (BV4) allen vier Blöcken zugeführt wird, um dadurch die räumliche Position des gegenwärtigen Pixels in Bezug auf die Mitten des gegenwärtigen Pixel-Blocks und der drei benachbarten Pixel-Blöcke zu berücksichtigen;
- Vergleichsmittel (CEE), die in jedem Fall das Minimum (R) der vier abgeschätzten Fehler (EE) bestimmen;
- Auswahlmittel (VS), um den entsprechenden der vier Block-Bewegungs-Vektoren in Bezug auf das Minimum als endgültigen Bewegungs-Vektor (OV) für das gegenwärtige Pixel zu nehmen.

11. Vorrichtung nach Anspruch 9, bei der die Pixel-Bewegungs-Vektormittel umfassen:

- Pixel-Anpassungsmittel (SPM), die für das gegenwärtige Pixel zusätzlich eine Pixel-Anpassung (SPM) unter Verwendung der Block-Bewegungs-Vektoren (V1, V2, V3, V4, BV4) für den gegenwärtigen Pixel-Block und für die drei benachbarten Pixel-Blöcke durchführen;
- Zählmittel (CV), um in Reihen die Zahl von Auswahlen (1/3, 2/4) aus dem linken bzw. rechten Block-Paar zu zählen, und um in Spalten die Zahl von Auswahlen (1/2, ¾) aus dem oberen bzw. unteren Block-Paar zu zählen, und um die vorbereitenden Vektor-Auswahl-Paare gemäß den Vektor-Auswahlkomponenten-Majoritäten neu zu ordnen, um Gruppen von identischen Vektor-Auswahl-Paaren derart zu bilden, daß für jedes Pixel zwei Vektor-Auswahl-Paare bestimmt werden, die eine selbe Vektor-Auswahlkomponente enthalten;
- Zuordnungsmittel (VA), die den endgültigen Bewegungs-Vektor (OVP) für das gegenwärtige Pixel durch dieselbe Vektor-Auswahlkomponente definieren.

12. Vorrichtung nach Anspruch 9, bei der die Pixel-Bewegungs-Vektormittel umfassen:

- Unterbolck-Anpassungsmittel (SPM), die zusätzlich eine Anpassung von Pixel-Unterblöcken ausführen, die kleiner sind als die Pixel-Blöcke (LB), wobei für einen gegenwärtigen Unterblock der Block-Bewegungs-Vektor (V1) für den gegenwärtigen Pixel-Block und die drei anderen Block-Bewegungs-Vektoren (V2, V3, V4) verwendet werden, und die in jedem Fall den Unterblock-Vektor (SBV) auswählen, der sich auf den minimalen Unterblock-Anpassungsfehler bezieht;
- Kombinationsmittel (MF), insbesondere Median-Filtermittel, die die ausgewählten Unterblock-Vektoren kombinieren, insbesondere die Komponenten der ausgewählten Unterblock-Vektoren, um dadurch den Bewegungs-Vektor für das gegenwärtige Pixel zu bestimmen.

**Revendications**

1. Procédé d'estimation du mouvement par correspondance de blocs, dans lequel des vecteurs de mouvement de blocs (BV) liés à des blocs de pixels (LB) sont calculés et, à partir des vecteurs de mouvement de blocs (BV), des vecteurs de mouvement de pixels (OV, OPV) sont calculés, caractérisé en ce que lesdits blocs de pixels ont une taille prédéterminée qui reste fixe dans le traitement de calcul des vecteurs de mouvement, et en ce que, pour chaque pixel d'un bloc de pixels courant, un vecteur de mouvement de pixel (OV, OPV, OSBV) est calculé en utilisant, dans chaque cas, le vecteur de mouvement de bloc (V1) pour le bloc de pixels courant et uniquement les trois autres vecteurs de mouvement de blocs (V2, V3, V4) pour les trois blocs de pixels adjacents les plus proches du quartier de pixels du bloc de pixels courant auquel appartient un pixel courant.

**2.** Procédé selon la revendication 1, comprenant les étapes suivantes :

- à partir de valeurs d'erreur (E4) dans ladite correspondance de blocs, relatives au vecteur de mouvement de bloc (V1) pour le bloc de pixels courant et auxdits trois autres vecteurs de mouvement de blocs (V2, V3, V4), dans chaque cas chacun des quatre vecteurs (BV4) étant appliqué à l'ensemble des quatre blocs, pour un pixel quelconque, quatre erreurs estimées (EE) sont calculées (EM, EI) pour ainsi tenir compte de la position spatiale du pixel courant par rapport aux centres du bloc de pixels courant et desdits trois blocs de pixels adjacents;
- choix (VS) du minimum (R) desdites quatre erreurs estimées afin de sélectionner le vecteur lié parmi lesdits quatre vecteurs de mouvement de blocs en tant que vecteur de mouvement final (OV) pour le pixel courant.

**3.** Procédé selon la revendication 2, dans lequel lesdites erreurs estimées (EE) sont calculées (EI) par interpolation linéaire.

**4.** Procédé selon la revendication 1, comprenant les étapes suivantes :

- mise en oeuvre, en plus, pour le pixel courant, d'une correspondance de pixels (SPM) en utilisant les vecteurs de mouvement de blocs (V1, V2, V3, V4, BV4) pour le bloc de pixels courant et pour lesdits trois blocs de pixels adjacents;
- comptage (CV) en lignes du nombre de choix (1/3, 2/4) à partir des paires de blocs de gauche, respectivement de droite, et comptage (CV) en colonnes du nombre de choix (1/2, 3/4) à partir de la paire de blocs supérieure, respectivement inférieure;
- réorganisation des paires de choix de vecteur préliminaires suivant les majorités des composantes de choix de vecteur dans le but de former des groupes de paires de choix de vecteur identiques de manière à ce que, pour chaque pixel, deux paires de choix de vecteur contenant une même composante de choix de vecteur définissent (VA) le vecteur de mouvement final (OPV) pour le pixel courant par cette même composante de choix de vecteur.

**5.** Procédé selon la revendication 1, comprenant les étapes suivantes :

- mise en oeuvre, en plus, d'une correspondance (SBM) de sous-blocs de pixels plus petits que lesdits blocs de pixels (LB), pour utiliser ainsi, pour un sous-bloc courant, le vecteur de mouvement de bloc (V1) pour le bloc de pixels courant et lesdits trois autres vecteurs de mouvement de blocs (V2, V3, V4);
- sélection, dans chaque cas, du vecteur de sous-bloc (SBV) lié à une erreur de correspondance de sous-blocs minimale et combinaison (MF) des vecteurs de sous-blocs sélectionnés pour déterminer ainsi le vecteur de mouvement pour ledit pixel courant.

**6.** Procédé selon la revendication 5, dans lequel ladite combinaison est un filtrage médian (MF) desdits vecteurs de sous-blocs (SBV), en particulier un filtrage médian de chaque composante des vecteurs de sous-blocs, séparément.

**7.** Procédé selon l'une quelconque des revendications 1 à 6, dans lequel ladite correspondance de blocs (LBM) est exécutée sur des images sous-échantillonnées.

**8.** Procédé selon l'une quelconque des revendications 1 à 7, dans lequel ladite correspondance de blocs (LBM) est une correspondance de blocs des deux côtés.

**9.** Appareil d'estimation du mouvement par correspondance de blocs, dans lequel des vecteurs de mouvement de blocs (BV) liés à des blocs de pixels (LB) sont calculés et, à partir des vecteurs de mouvement de blocs (BV), des vecteurs de mouvement de pixels (OV, OPV) sont calculés, caractérisé par :

- un moyen (LBM, BVM) pour calculer et stocker des vecteurs de mouvement (BV) pour lesdits blocs de pixels (LB), lesdits blocs de pixels ayant une taille prédéterminée qui reste fixe dans le traitement de calcul des vecteurs de mouvement;
- un moyen de vecteurs de mouvement de pixels (EMC, EM, EI, CEE, VS; SPM, CV, VA; SBM, MF) pour calculer, pour chaque pixel d'un bloc de pixels courant, un vecteur de mouvement de pixel (OV, OPV, OSBV) en utilisant, dans chaque cas, le vecteur de mouvement de blocs (V1) pour le bloc de pixels courant et uniquement les trois autres vecteurs de mouvement de blocs (V2, V3, V4) pour les trois blocs de pixels adjacents les plus proches du quartier de pixels du bloc de pixels courant auquel appartient un pixel courant.

10. Appareil selon la revendication 9, dans lequel ledit moyen de vecteurs de mouvement de pixels comprend:

- un moyen d'estimation d'erreurs (EI), en particulier un moyen d'interpolation linéaire d'erreurs, qui calcule, pour un pixel quelconque, quatre erreurs estimées (EE) à partir de valeurs d'erreur (E4) stockées (EM) dans ladite correspondance de blocs correspondant au vecteur de mouvement de blocs (V1) pour le bloc de pixels courant et auxdits trois autres vecteurs de mouvement de blocs (V2, V3, V4), dans lequel, dans le moyen d'estimation d'erreurs, dans chaque cas, chacun des quatre vecteurs (BV4) est appliqué à l'ensemble des quatre blocs, pour ainsi tenir compte de la position spatiale du pixel courant par rapport aux centres du bloc de pixels courant et desdits trois blocs de pixels adjacents;
- un moyen de comparaison (CEE) qui détermine, dans chaque cas, le minimum (R) desdites quatre erreurs estimées (EE);
- un moyen de sélection (VS) pour choisir, en relation avec ledit minimum, le vecteur respectif parmi lesdits quatre vecteurs de mouvement de blocs comme vecteur de mouvement final (OV) pour le pixel courant.

11. Appareil selon la revendication 9, dans lequel ledit moyen de vecteurs de mouvement de pixels comprend:

- un moyen de correspondance de pixels (SPM) qui met en plus en oeuvre, pour le pixel courant, une correspondance de pixels (SPM) en utilisant les vecteurs de mouvement de blocs (V1, V2, V3, V4, BV4) pour le bloc de pixels courant et pour lesdits trois blocs de pixels adjacents;
- un moyen de comptage (CV) pour compter en lignes le nombre de choix (1/3, 2/4) à partir des paires de blocs de gauche, respectivement de droite,
  et pour compter (CV) en colonnes le nombre de choix (1/2, 3/4) à partir de la paire de blocs supérieure, respectivement inférieure
  et pour réorganiser les paires de choix de vecteur préliminaires suivant les majorités des composantes de choix de vecteur dans le but de former des groupes de paires de choix de vecteur identiques de manière à déterminer, pour chaque pixel, deux paires de choix de vecteur contenant une même composante de choix de vecteur;
- un moyen d'affectation (VA) qui définit le vecteur de mouvement final (OPV) pour le pixel courant par cette même composante de choix de vecteur.

12. Appareil selon la revendication 9, dans lequel ledit moyen de vecteurs de mouvement de pixels comprend:

- un moyen de correspondance de sous-blocs (SBM) qui met en oeuvre, en plus, une correspondance de sous-blocs de pixels plus petits que lesdits blocs de pixels (LB), pour utiliser ainsi, pour un sous-bloc courant, le vecteur de mouvement de blocs (V1) pour le bloc de pixels courant et lesdits trois autres vecteurs de mouvement de blocs (V2, V3, V4), et qui sélectionne, dans chaque cas, le vecteur de sous-bloc (SBV) lié à une erreur de correspondance de sous-blocs minimale;
- un moyen de combinaison (MF), en particulier un moyen de filtrage médian, qui combine les vecteurs de sous-blocs sélectionnés, en particulier les composantes desdits vecteurs de sous-blocs sélectionnés, pour déterminer ainsi le vecteur de mouvement pour ledit pixel courant.

RLMV

## Fig.1

## Fig.2

**IPV**

| 1 | 1 | 4 | 2 | 3 | 3 | 3 | 4 |
| 3 | 2 | 3 | 1 | 1 | 2 | 1 | 4 |
| 1 | 3 | 3 | 3 | 2 | 3 | 3 | 4 |
| 3 | 1 | 4 | 4 | 4 | 2 | 4 | 2 |

**RCR  RC**

| 13 | 13 | 24 | 24 | 13 | 13 | 13 | 24 | a=5 |
| 13 | 24 | 13 | 13 | 13 | 24 | 13 | 24 | a=5 |
| 13 | 13 | 13 | 13 | 24 | 13 | 13 | 24 | a=6 |
| 13 | 13 | 24 | 24 | 24 | 24 | 24 | 24 | a=2 |

**VAR**

| 13 | 13 | 13 | 13 | 13 | 24 | 24 | 24 |
| 13 | 13 | 13 | 13 | 13 | 24 | 24 | 24 |
| 13 | 13 | 13 | 13 | 13 | 13 | 24 | 24 |
| 13 | 13 | 24 | 24 | 24 | 24 | 24 | 24 |

**RCC**

| 12 | 12 | 34 | 12 | 34 | 34 | 34 | 34 |
| 34 | 12 | 34 | 12 | 12 | 12 | 12 | 34 |
| 12 | 34 | 34 | 34 | 12 | 34 | 34 | 34 |
| 34 | 12 | 34 | 34 | 34 | 12 | 34 | 12 |

b= 2 3 0 2 2 2 1 1

**CC**

**VAC**

| 12 | 12 | 34 | 12 | 12 | 12 | 12 | 12 |
| 12 | 12 | 34 | 12 | 12 | 12 | 34 | 34 |
| 34 | 12 | 34 | 34 | 34 | 34 | 34 | 34 |
| 34 | 34 | 34 | 34 | 34 | 34 | 34 | 34 |

**FVA**

| 1 | 1 | 3 | 1 | 1 | 2 | 2 | 2 |
| 1 | 1 | 3 | 1 | 1 | 2 | 4 | 4 |
| 3 | 1 | 3 | 3 | 3 | 3 | 4 | 4 |
| 3 | 3 | 4 | 4 | 4 | 4 | 4 | 4 |

**Fig.3**

12

BVM

VA

BV

OPV

BVM

BV

INP

BV4

BV

LBM

SPM

PV

CV

**Fig.4**

BVM

BV

INP

BV4

BV

LBM

SBM

SBV

MF

OSBV

**Fig.5**